# EUROPEAN PATENT APPLICATION

(11) **EP 1 588 921 A1**
(43) Date of publication of application: **26.10.2005**
(21) Application number: 04700759.6
(22) Date of filing: 08.01.2004
(51) Int. Cl.: B62D 1/20, F16D 3/06

(54) **TELESCOPIC SHAFT FOR MOTOR VEHICLE STEERING**

(30) Priority: 10.01.2003 JP 2003004774
(71) Applicant: NSK Ltd., Tokyo 141-8560 (JP); NSK Steering Systems Co. Ltd, Shinagawa-ku, Tokyo 141-8560 (JP)
(72) Inventor: Yukawa, Kinji, Fujisawa-shi, Kanagawa 251-0021 (JP); Yamada, Yasuhisa, Maebashi-shi, Gunma 371-0853 (JP)
(74) Representative: Cross, James Peter Archibald
(86) International application number: PCT/JP2004/000056
(87) International publication number: WO 2004/062981

(57) **Abstract**

In a telescopic shaft for vehicle steering which is installed in a steering shaft of a vehicle and in which a male shaft and a female shaft are fitted to each other to be unrotatable and freely slidable, a spherical member (7) is interposed between at least one of axial grooves (3, 5) which are respectively formed on the outer peripheral surface of the male shaft (1) and on the inner peripheral surface of the female shaft (2) through an elastic member (9), and a columnar member (8) is interposed between at least another of axial grooves (4, 6) which are respectively formed on the outer peripheral surface of the male shaft (1) and on the inner peripheral surface of the female shaft (2). The elastic member (9) comprises a contact portion (9a) on the spherical member side which is in contact with the spherical member, a contact portion (9b) on the groove surface side which is separated from the contact portion (9a) on the spherical member side by a predetermine distance in a substantially circumferential direction and, at the same time, in contact with the groove surface of the axial groove of the male shaft or the female shaft, and a biasing portion (9c) for elastically biasing the contact portion on the spherical member side and the contact portion on the groove surface side in a direction in which both the contact portions are separated from each other.

## Description

### TECHNICAL FIELD

The present invention relates to a telescopic shaft for vehicle steering which is installed in a steering shaft of a vehicle and in which a male shaft and a female shaft are fitted to each other to be mutually unrotatable and slidable.

### BACKGROUND ART

A telescopic shaft of a steering mechanism of a vehicle is required to have a property of absorbing an axial displacement which is generated when the vehicle is running and of preventing such displacement or vibration from being propagated onto a steering wheel. Further, the telescopic shaft is also required to have a function of moving the position of the steering wheel in the axial direction and then adjusting this position in order to obtain an optimal position for the driver to drive the vehicle.

In any of these cases, the telescopic shaft is required to reduce rattling noise, to decrease backlash feeling on the steering wheel, and to reduce a sliding resistance during a sliding operation in the axial direction.

For such reasons, conventionally, a male shaft of the telescopic shaft is coated with nylon film and grease is applied onto a sliding portion thereof, so as to absorb or mitigate metallic noise and metallic rattle and, at the same time, to reduce a sliding resistance and backlash in the direction of rotation.

However, there is a case that abrasion of the nylon film advances with use and the backlash in the direction of rotation becomes great. Also, under the high-temperature condition inside the engine room, the nylon film is changed in volume, so that a sliding resistance becomes conspicuously great or the abrasion is notably quickened sometimes. As a result, the backlash in the direction of rotation may become great in such a case.

On that account, in German Patent DE No.3730393C2, between plural pairs of axial grooves respectively formed on the outer peripheral surface of a male shaft and on the inner peripheral surface of a female shaft, torque transmitting members (spherical members) which are rotated when both shafts are relatively rotated in the axial direction are fitted.

Also, in German Patent DE No.3730393C2, leaf springs each serving as an elastic member for applying preload to the male shaft and the female shaft through the spherical members serving as the torque transmitting members are interposed between the inner side or the outer side in the radial direction of the spherical members serving as the torque transmitting members and the axial grooves of each pair.

With this arrangement, since the spherical members serving as the torque transmitting members are preloaded against the female shaft by the leaf springs to the extent that no backlash is generated at the time of non-transmission of torque, it is possible to prevent backlash between the male shaft and the female shaft, whereby the male shaft and the female shaft can slide in the axial direction with a stable sliding load without backlash.

Also, since it is arranged such that the spherical members serving as the torque transmitting members can be restrained in the circumferential direction by the leaf springs at the time of transmission of torque, the male shaft and the female shaft can transmit the torque in a state of high rigidity by preventing backlash in the direction of rotation thereof.

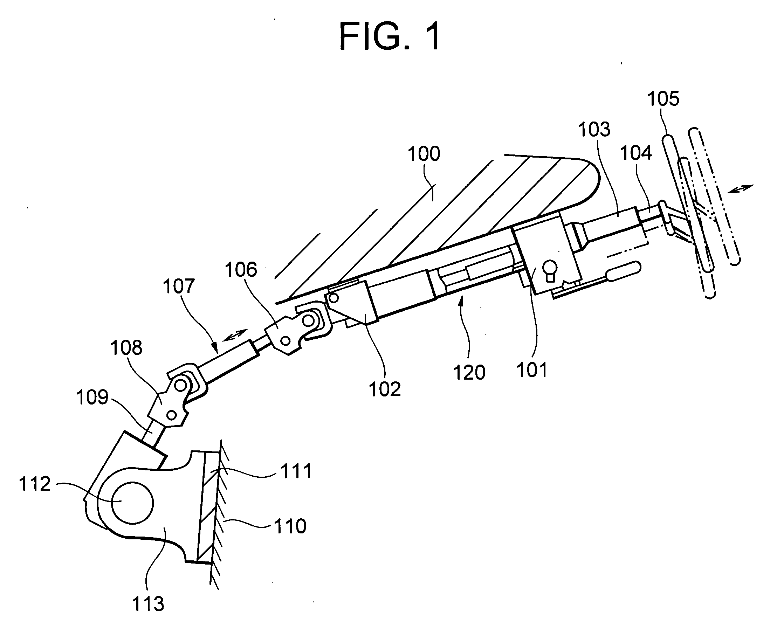

Moreover, in a structure disclosed in Figs. 1 to 5 of German Patent DE No.3730393C2, one leaf spring for applying preload to one set of torque transmitting members (spherical members) and another leaf spring for applying preload to another set of torque transmitting members (spherical members) which is adjacent to the former leaf spring in the circumferential direction are coupled together in the circumferential direction with a web which is an arch-shaped coupling portion extended in the circumferential direction.

This coupling portion (web) is provided to give the above-described two leaf springs tension and compression force therebetween, thereby generating preload in the two leaf springs.

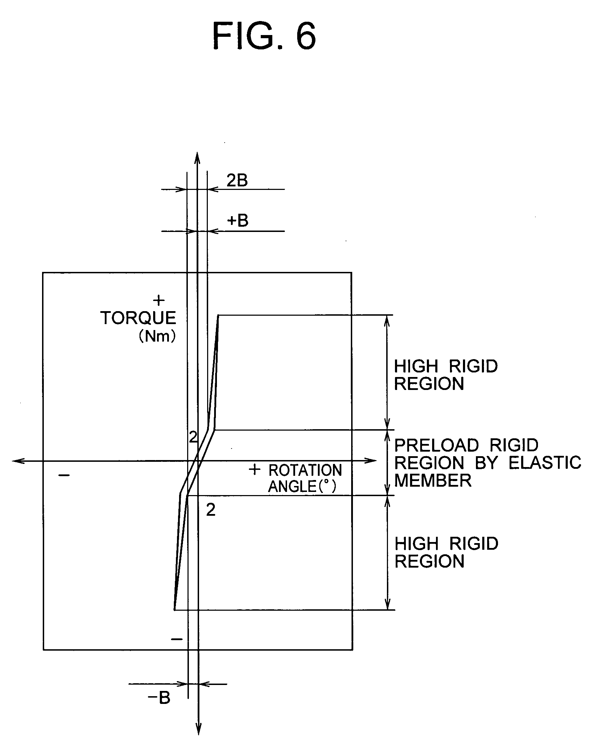

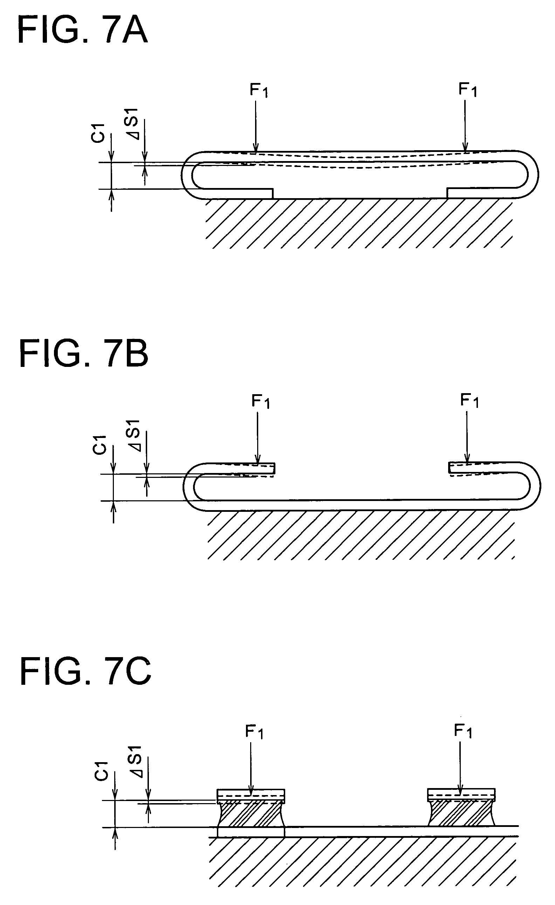

Note that in a structure disclosed in Figs. 6 and 7 of German Patent DE No.3730393C2, the two leaf springs are not coupled by the coupling portion (web). Instead, another elastic member is interposed between the leaf springs and the axial grooves, thereby generating preload in the radial direction.

However, in the structure disclosed in German Patent DE No.3730393C2, firstly preload is generated among the male shaft, spherical member and the female shaft, so that the leaf spring is interposed with the curvature thereof and the curvature of the axial groove being changed. For this reason, a flexural amount of the leaf spring can not be great. In this respect, when there are fluctuations in the processing precision, these fluctuations in the processing precision can not be allowed with this level of flexural amount of the leaf spring.

Secondly, since the male shaft, the leaf spring, the spherical member and the female shaft are mutually contracted, when torque is inputted, to transmit the torque, a contact point between the spherical member and the leaf spring has a very high surface pressure. That is, at the time of torque transmission, high stress is generated in the leaf spring, so that the "worn-out condition" of the leaf spring due to permanent deformation thereof is brought about. As a result, it is difficult to maintain the preload performance in a long term and it is feared that the prolonged life of the steering shaft is hindered.

Thirdly, at the time of torque transmission, it is feared that the leaf spring slides sideways from the axial groove in the circumferential direction so as to deteriorate the transmitted torque. It is also feared that the magnitude of the hysteresis can not be controlled so that the hysteresis is generated excessively.

Further, fourthly, since contact points between the male shaft, the spherical member, the leaf spring and the female shaft are not aligned in one line when the torque is not loaded, an angle of contact changes in accordance with a loaded torque. As a result, not only a linear torsional property required for the steering shaft can not be obtained, but also an appropriate hysteresis may not be obtained.

### SUMMARY OF THE INVETNION

The present invention has been contrived taking such circumstances as described above into consideration, and an object thereof is to provide a telescopic shaft for vehicle steering which is capable of preventing backlash in a direction of rotation without fail, thereby transmitting torque in a state of high rigidity.

In order to achieve the above object, according to claim 1 of the present invention, there is provided a telescopic shaft for vehicle steering which is installed in a steering shaft of a vehicle and in which a male shaft and a female shaft are fitted to each other to be unrotatable and freely slidable, characterized in that:
a first torque transmitting member is interposed between at least one of axial grooves which are respectively formed on the outer peripheral surface of the male shaft and on the inner peripheral surface of the female shaft through an elastic member;
a second torque transmitting member is interposed between at least another of axial grooves which are respectively formed on the outer peripheral surface of the male shaft and on the inner peripheral surface of the female shaft; and
the elastic member comprises:
   a contact portion on the transmitting member side which is in contact with the first torque transmitting member;
   a contact portion on the groove surface side which is separated from the contact portion on the transmitting member side by a predetermine distance in a substantially circumferential direction and, at the same time, in contact with the groove surface of the axial groove of the male shaft or the female shaft; and
   a biasing portion for elastically biasing the contact portion on the transmitting member side and the contact portion on the groove surface side in a direction in which both the contact portions are separated from each other.

According to the present invention, it is possible to provide a telescopic shaft for vehicle steering which can securely prevent backlash in the direction of rotation and can transmit torque in a sate of high rigidity.

According to the present invention, the telescopic shaft can achieve a stable sliding load. According to the present invention, the contact portion on the transmitting member side can be sufficiently flexed through the biasing portion, so that a flexural amount can be sufficiently secured.

Since the telescopic shaft is provided with the second torque transmitting member, in addition to the first torque transmitting member, the second transmitting member is brought into contact with the axial grooves of the male shaft and the female shaft before the elastic member at the time of torque transmission, so that the second torque transmitting member can transmit the torque mainly, so that an excessive load (stress) is not applied on the first torque transmitting member and the elastic member.

Further, since the elastic member can secure a sufficient flexural amount, as described above, and at the same time, an excessive load (stress) is not applied on the first torque transmitting member and the elastic member, it is possible to mitigate the stress which is generated in the contact portion between the first transmitting member and the elastic member at the time of torque transmission. With this arrangement, no great stress is not produced, and the "worn-out condition" due to the permanent deformation can be prevented so as to maintain the preload performance for a long term.

Further, in the elastic member, the contact portion on the transmitting member side thereof is in contact with the first torque transmitting member and, at the same time, the contact portion on the groove surface side thereof is in contact with the groove surface of the axial groove, so that the elastic member is in a state that it is fitted to the axial groove to each other. As a result, at the time of torque transmission, it is difficult for the whole elastic member to slide sideways from the axial groove, so that the deterioration of the transmitted torque is prevented and the hysteresis can be prevented from being excessive.

Further, between the male shaft, the spherical member, the elastic member and the female shaft, the contact portions remain on the same line, irrespective of loaded condition of the torque. As a result, the contact angle is not changed, whereby the linear torsional property required for the steering shaft can be obtained and the steering property which is linear and has high rigid feeling can be obtained.

Also, in a telescopic shaft for vehicle steering according to the present invention, the first torque transmitting member is a rolling member which is rotated when both the shafts are moved relatively to each other in the axial direction, and the second torque transmitting member is a sliding member which slides in a slip manner when both the shafts are moved relatively to each other in the axial direction.

As described above, in the telescopic shaft for vehicle steering according to the present invention, it is preferable that the first torque transmitting member comprises a rolling member which is rotated when both the shafts are moved relatively to each other in the axial direction, and the second torque transmitting member comprises a sliding member which slides in a slip manner hen both the shafts are moved relatively to each other in the axial direction. According to this structure, at the time of torque transmission, the second transmitting member of the sliding member is brought into contact with the axial grooves of the male shaft and the female shaft before the elastic member and, at the same time, the second torque transmitting member can transmit the torque mainly, so that an excessive load (stress) is not applied on the first torque transmitting member and the elastic member. As a result, at the starting time or at the time of torque transmission, it is possible to mitigate the stress which is generated in the contact portion between the first transmitting member and the elastic member, and to prevent the "worn-out condition" due to the permanent deformation so as to maintain the preload performance for a long term.

Further, in the telescopic shaft for vehicle steering according to the present invention, it is preferable that the biasing portion of the elastic member is in a folded-back form which is folded back between the contact portion on the transmitting member side and the contact portion on the groove surface side. According to this preferable structure of the present invention, the biasing portion of the elastic member is in a folded-back form which is folded back between the contact portion on the transmitting member side and the contact portion on the groove surface side, it is possible to elastically bias the contact portion on the transmitting member side and the contact portion on the groove surface side by the use of this biasing portion in the folded-back form so that these two contact portions are separated from each other.

Further, it is preferable to arrange the telescopic shaft for vehicle steering according to the present invention such that the axial groove of the male shaft or the female shaft comprises a flat-shaped side surface which is in contact with a contact portion on the groove surface and a bottom surface which is connected to the flat-shaped side surface, the elastic member has a bottom portion opposed to the bottom surface of the axial groove, and the bottom portion of the elastic member is in a state of contacting with the bottom surface of the axial groove, or the bottom surface of the axial groove is separated from the bottom portion of the elastic portion by a predetermined distance. As a result, the hysteresis can be controlled by bringing the bottom portion of the elastic member into contact with the bottom surface of the axial groove in case of need, so that a desired hysteresis can be obtained. That is, the hysteresis is required to be changed in various manners depending on a matching condition with the steering performance of each vehicle. More specifically, if the bottom portion of the elastic member is set in the state of contacting with the bottom surface of the axial groove, friction is caused when the axial groove and the elastic member are moved relatively to each other, so that the hysteresis can be set as comparatively great. On the other hand, if the bottom surface of the axial groove is set to be separated from the bottom portion of the elastic member by a predetermined distance, no friction is caused when the axial groove and the elastic member are moved relatively to each other, so that the hysteresis can be set as comparatively small.

Further, in the telescopic shaft for vehicle steering according to the present invention, the biasing portion of the elastic member may be separately provided from the contact portion on the transmitting member side and the contact portion on the groove surface side, and may be formed of a material different therefrom. With this structure, a stress which is generated in the biasing portion at the time of torque transmission can be set as comparatively small.

In the telescopic shaft for vehicle steering according to the present invention, the elastic member may have, in addition to the contact portion on the transmitting member side, the contact portion on the groove surface side and the biasing portion, a second biasing portion which is formed separately of a material different therefrom. With this structure, the elastic member can achieve the steering property with a desired high rigid feeling.

Further, in the telescopic shaft for vehicle steering according to the present invention, the elastic member may be arranged to comprise a leaf spring. In this case, the elastic member can achieve the steering property with a desired high rigid feeling while suppressing the manufacturing cost.

Further, in the telescopic shaft for vehicle steering according to the present invention, the biasing member which is separately formed of a different material and the second biasing member which is also separately formed of a different material may be formed of rubber or synthetic resin. With this structure, a stress which is generated in the biasing portion at the time of torque transmission can be set as comparatively small, and the steering property with a desired high rigid feeling can be obtained.

Further, in the telescopic shaft for vehicle steering according to the present invention, it is preferable that a lubricating agent is applied between the axial groove of the male shaft, the axial groove of the female shaft, the elastic member and the first torque transmitting member. According to this structure, since the lubricating agent is applied between the axial groove of the male shaft, the axial groove of the female shaft, the elastic member and the first torque transmitting member, the male shaft and the female shaft can slide in the axial direction with a stable sliding load without backlash at the time of torque transmission.

Further, in the telescopic shaft for vehicle steering according to the present invention, a predetermined gap provided among the male shaft, the second torque transmitting member and the female shaft so that it is preferable that the relation of A > B is satisfied when a rotatable angle among the male shaft, the elastic member, the first torque transmitting member and the female shaft in the circumferential direction of the male shaft is A, and an angle of rotation of the among between the male shaft, the second torque transmitting member and the female shaft in the circumferential direction of the male shaft is B.

In the telescopic shaft for vehicle steering according to the present invention, it is preferable that the angle of rotation B of the male shaft for the predetermined gap is set within a range from 0.01° to 0.25° .

### BRIEF DESCRIPTION OF THE DRAWING

Fig. 1 is a side view of a steering mechanism of a vehicle to which a telescopic shaft for vehicle steering according to an embodiment of the present invention is applied;
Fig. 2A is a vertical cross sectional view of a telescopic shaft for vehicle steering according to a first embodiment of the present invention, and Fig. 2B is a perspective view of a leaf spring serving as an elastic member;
Fig. 3 is a transverse cross sectional view, taken along the line X-X in Fig. 2A;
Fig. 4 is a cross sectional view of an enlarged portion of the telescopic shaft for vehicle steering according to the first embodiment of the present invention, at a non-transmission time of torque;
Fig. 5 is a cross sectional view of an enlarged portion of the telescopic shaft for vehicle steering according to the first embodiment of the present invention, at a transmission time of the torque;
Fig. 6 is a characteristic chart for showing the relationship between a steering angle (angle of rotation) of a steering wheel and a steering torque (torque of the steering wheel);
Fig. 7A, Fig. 7B and Fig. 7C are schematic views each showing a flexural state of a leaf spring used in each of the embodiments of the present invention;
Fig. 8 is a transverse cross sectional view of a telescopic shaft for vehicle steering according to a second embodiment of the present invention (corresponding to transverse cross sectional view, taken along the line X-X in Fig. 2A);
Fig. 9 is a transverse cross sectional view of a telescopic shaft for vehicle steering according to a third embodiment of the present invention (corresponding to transverse cross sectional view, taken along the line X-X in Fig. 2A);
Fig. 10 is a transverse cross sectional view of a telescopic shaft for vehicle steering according to a fourth embodiment of the present invention (corresponding to transverse cross sectional view, taken along the line X-X in Fig. 2A);
Fig. 11 is a transverse cross sectional view of a telescopic shaft for vehicle steering according to a fifth embodiment of the present invention (corresponding to transverse cross sectional view, taken along the line X-X in Fig. 2A);
Fig. 12 is a transverse cross sectional view of a telescopic shaft for vehicle steering according to a sixth embodiment of the present invention (corresponding to transverse cross sectional view, taken along the line X-X in Fig. 2A);
Fig. 13 is a transverse cross sectional view of a telescopic shaft for vehicle steering according to a seventh embodiment of the present invention (corresponding to transverse cross sectional view, taken along the line X-X in Fig. 2A);
Fig. 14 is a transverse cross sectional view of a telescopic shaft for vehicle steering according to an eighth embodiment of the present invention (corresponding to transverse cross sectional view, taken along the line X-X in Fig. 2A);
Fig. 15 is a transverse cross sectional view of a telescopic shaft for vehicle steering according to a ninth embodiment of the present invention (corresponding to transverse cross sectional view, taken along the line X-X in Fig. 2A);
Fig. 16 is a transverse cross sectional view of a telescopic shaft for vehicle steering according to a tenth embodiment of the present invention (corresponding to transverse cross sectional view, taken along the line X-X in Fig. 2A);
Fig. 17 is a transverse cross sectional view of a telescopic shaft for vehicle steering according to an eleventh embodiment of the present invention (corresponding to transverse cross sectional view, taken along the line X-X in Fig. 2A);
Fig. 18 is a transverse cross sectional view of a telescopic shaft for vehicle steering according to a twelfth embodiment of the present invention (corresponding to transverse cross sectional view, taken along the line X-X in Fig. 2A);
Fig. 19 is a transverse cross sectional view of a telescopic shaft for vehicle steering according to a thirteenth embodiment of the present invention (corresponding to transverse cross sectional view, taken along the line X-X in Fig. 2A);
Fig. 20 is a transverse cross sectional view of a telescopic shaft for vehicle steering according to a fourteenth embodiment of the present invention (corresponding to transverse cross sectional view, taken along the line X-X in Fig. 2A);
Fig. 21 is a transverse cross sectional view of a telescopic shaft for vehicle steering according to a fifteenth embodiment of the present invention (corresponding to transverse cross sectional view, taken along the line X-X in Fig. 2A);
Fig. 22 is a cross sectional view of an enlarged portion of a telescopic shaft for vehicle steering according to the German patent DE No. 3730393C2, at a non-transmission time of the torque;
Fig. 23 is a cross sectional view of an enlarged portion of the telescopic shaft for vehicle steering according to the German patent DE No. 3730393C2, at a transmission time of the torque; and
Fig. 24A and Fig. 24B are respectively schematic views each for showing a flexural state of a leaf spring used in the German patent DE No. 3730393C2.

### EMBODIMENTS OF THE INVENTION

A telescopic shaft for vehicle steering according to embodiments of the present invention will be described below with reference to drawings.

### (Entire Structure of a Steering Shaft For a Vehicle)

Fig. 1 is a side view of a steering mechanism of a vehicle in which a telescopic shaft for vehicle steering according to an embodiment of the present invention is applied.

In Fig. 1, the steering mechanism is constituted by an upper steering shaft portion 120 (including a steering column 103 and a steering shaft 104 retained by the steering column 103 to be rotatable) which is attached to a vehicle body-side member 100 through an upper bracket 101 and a lower bracket 102, a steering wheel 105 which is attached to an upper end of the steering shaft 104, a lower steering shaft portion 107 which is coupled to a lower end of the steering shaft 104 through a universal joint 106, a pinion shaft 109 which is coupled to the lower steering shaft portion 107 through a steering shaft joint 108, a steering rack shaft 112 coupled to the pinion shaft 109, and a steering rack supporting member 113 which supports the steering rack shaft 112 and is fixed to another frame of the vehicle body through an elastic member 111.

In this case, each of the upper steering shaft portion 120 and the lower steering shaft portion 107 employs a telescopic shaft for vehicle steering according to an embodiment of the present invention (hereinafter called the telescopic shaft). The lower steering shaft portion 107 is formed by fitting a male shaft and a female shaft to each other. Such a lower steering shaft portion 107 is required to have the property of absorbing an axial displacement which is generated during the running of the vehicle so as not to transmit the displacement or vibration onto the steering wheel 105. Such a property is required for a structure in which the vehicle body is in a sub-frame structure so that the member 100 for fixing an upper part of the steering mechanism is separately provided from the frame 110 to which the steering rack supporting member 113 is fixed, and the steering rack supporting member 113 is fixedly clamped to the frame 110 through the elastic member 111 of rubber, or the like. There is also another case that an extending/contracting function is required by an operator, when clamping the steering shaft joint 108 to the pinion shaft 109, for once contracting the telescopic shaft to be fitted and clamped to the pinion shaft 109. Further, though the upper steering shaft 120 which is provided in an upper part of the steering mechanism is also formed by fitting the male shaft and the female shaft to each other, such an upper steering shaft portion 120 is required to have the function of moving the position of the steering wheel 105 in the axial direction and then adjusting the position thereof so as to obtain an optimal position for the driver to drive the vehicle. In all the foregoing cases, the telescopic shaft is required to reduce rattling noise in the fitting portion, decrease backlash feeling on the steering wheel 105, and reduce a sliding resistance during sliding movement in the axial direction.

### (First Embodiment)

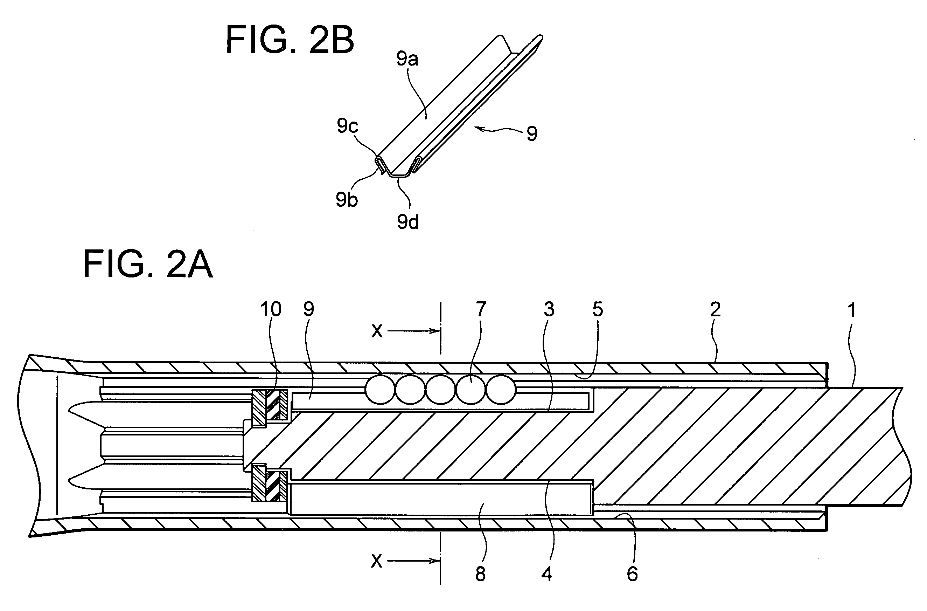

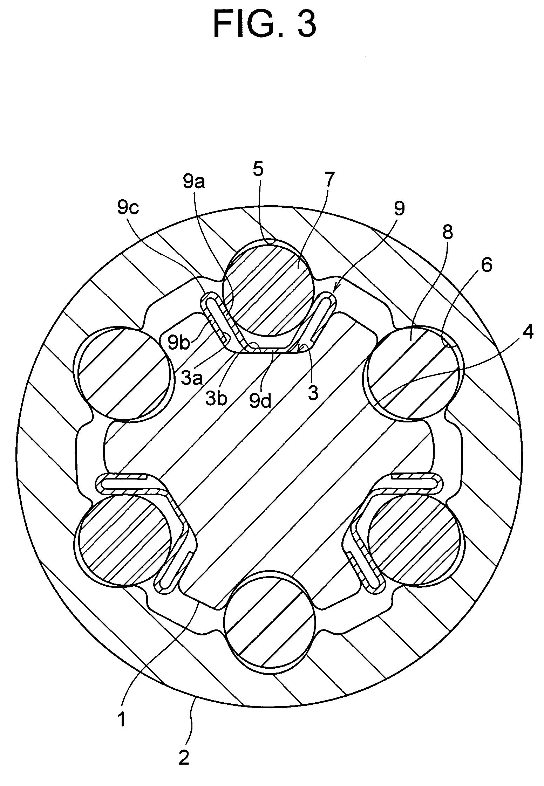

Fig. 2A is a longitudinal cross sectional view of a telescopic shaft for vehicle steering according to a first embodiment of the present invention, and Fig. 2B is a perspective view of a leaf spring serving as an elastic member. Fig. 3 is a transverse cross sectional view, taken along the line X-X in Fig. 2A.

As shown in Fig. 2A, the telescopic shaft for vehicle steering (hereinafter called the telescopic shaft) comprises a male shaft 1 and a female shaft 2 which are fitted to each other to be unrotatable and slidable.

As shown in Fig. 3, three grooves 3 are provided on the outer peripheral surface of the male shaft 1 at regular intervals of 120° in the circumferential direction to be extended in the axial direction. To be corresponding thereto, also on the inner peripheral surface of the female shaft 2, there are provided three grooves (hereinafter called the axial grooves) 5 which are extended in the axial direction at regular intervals of 120° in the circumferential direction.

Between the axial grooves 3 of the male shaft 1 and the axial grooves 5 of the female shaft 2, a plurality of spherical members 7 which are rigid bodies for rotating upon relative movement of the male and female shafts 1 and 2 in the axial direction are interposed to be rotatable. Each of the axial grooves 5 of the female shaft 2 has substantially an arch-shaped or Gothic arch-shaped cross section.

The axial groove 3 extended in the axial direction of the male shaft 1 (hereinafter called the axial groove also) is constituted by a pair of flat side surfaces 3a which are inclined to diverge outwardly in the radial direction and a bottom surface 3b which is formed to be flat between these paired flat side surfaces 3a.

Between the axial groove 3 of the male shaft 1 and the spherical member 7, a leaf spring 9 is interposed for contacting the spherical member 7 and applying preload thereto.

This leaf spring 9 has a unitary integral structure comprising flat-plate shaped contact portions 9a on the spherical member side each of which is in contact with the spherical member 7 at a point, flat-plate shaped contact portions 9b on the groove surface sides each of which is separated from the contact portion 9a on the spherical member side by a predetermined distance substantially in the circumferential direction and which is at the same time in contact with the flat side surface 3a of the axial groove 3 of the male shaft 1, biasing portions 9c each of which separates the contact portion 9a on the spherical member side and the contact portion 9b on the groove surface side from each other for elastically biasing both the contact portions 9a, 9b in the direction of separation, and a bottom portion 9d which is opposed to the bottom surface 3b of the axial groove 3 and is connected to the contact portions 9a, 9a on the spherical member side.

The biasing portion 9c is in a folded form which is folded to be substantially U-shaped and substantially arch-shaped. The contact portion 9a on the spherical member side and the contact portion 9b on the groove surface are elastically biased by this folded-shaped biasing portion 9c to be separated from each other.

As shown in Fig. 3, three grooves 4 extended in the axial direction (hereinafter called the axial grooves also) are provided on the outer peripheral surface of the male shaft 1 at regular intervals of 120° in the circumferential direction. To be corresponding thereto, also on the inner peripheral surface of the female shaft 2, there are provided three grooves 6 (hereinafter called the axial grooves) to be extended in the axial direction at regular intervals of 120° in the circumferential direction.

Between the axial grooves 4 of the male shaft 1 and the axial grooves 6 of the female shaft 2, a plurality of columnar members 8 (needle rollers) which are rigid bodies for slidably moving upon relative movement of the male shaft 1 and the female shaft 2 in the axial direction are interposed with very small gaps therebetween. Each of the axial grooves 4 and 6 has substantially an arch-shaped or Gothic arch-shaped cross section.

Also, as shown in Fig. 2A, a stopper plate 10 with an annular elastic member is provided at an end of the male shaft 1. The spherical members 7, the columnar members 8 and the leaf springs are prevented from slipping off by this stopper plate 10 with the elastic member.

Since lubricating agent (grease) is applied between the axial grooves 3 of the male shaft 1, the axial grooves 5 of the female shaft 2, the leaf springs 9, and the spherical members 7, the male shaft and the female shaft can slide in the axial direction with a stable sliding load without backlash at the time of non-transmission of torque.

As a material of the male shaft 1, a steel material containing 0.3% or more of carbon C and 0.3% or more of manganese Mn is employed. The male shaft is formed to have the hardness of HV120 or more by cold forming and broaching. A solid lubricating film of MOS2, PTFE or the like may be applied on the surface of the male shaft 1.

As a material of the female shaft 2, a steel material containing 0.2% or more of carbon C is employed. The female shaft 2 is formed to have the hardness of HV120 or more by cold forming and broaching. The axial grooves 5 and 6 are arranged in three to six rows. A solid lubricating film of MOS2, PTFE or the like may be applied on the surface of the female shaft 2.

The leaf spring 9 is formed of SK material (S50C to 60C), SUS304 material, or the like, to have the hardness of HV 300 to 400. The surface treatment of the leaf spring 9 is performed by quenching and tempering, while the forming method thereof is pressing and secondary processing. The spherical member 7 is formed of SUJ2, ceramic, or the like, to have the hardness of HV 300 or more. Three to seven spherical members 7 are arranged in each of rows, and the diameter of each spherical member is 3mm to 7mm. The stopper plate 10 with the elastic member is formed by pressing, and is fixed by plastically deforming by caulking or clinching. The grease used in this case contains a solid lubricating material such as MOS2 or PTFE.

According to the telescopic shaft having such a structure as described above, since the spherical member 7 is interposed between the male shaft 1 and the female shaft 2 and the spherical member 7 is preloaded to the extent that no backlash is generated with respect to the female shaft 2, it is possible to securely prevent backlash between the male shaft 1 and the female shaft 2 at the time of non-transmission of torque. At the same time, the male shaft 1 and the female shaft 2 can slide with a stable sliding load with no backlash when they are moved in the axial direction relatively to each other.

At the time of transmission of torque, the leaf spring 9 is elastically deformed to restrain the spherical member 7 in the circumferential direction. Meanwhile, three rows of the columnar members 8 interposed between the male shaft 1 and the female shaft 2 mainly discharge the function of transmitting torque.

For example, when torque is inputted from the male shaft 1, since preload of the leaf spring 9 is applied in the initial stage, there is generated no backlash and the reaction force against torque is generated by the leaf spring 9 to transmit the torque. In this case, the torque transmission as a whole is performed in a state that the transmitted torque and the inputted torque between the male shaft 1, leaf spring 9, the spherical member 7 and the female shaft 2 are in balance.

When the torque is further increased, a gap between the male shaft 1 and the female shaft 2 through the columnar members 8 in the direction of rotation disappears so that the columnar members 8 transmit a subsequent incremental portion of the torque through the male shaft 1 and the female shaft 2. For this reason, it is possible to securely avoid backlash in the direction of rotation between the male shaft 1 and the female shaft 2 and to transmit the torque in a state of high rigidity.

From the above description, according to the present embodiment, since the columnar members 8 are provided in addition to the spherical members 7, almost all of the load amount can be supported by the columnar members 8 when a great amount of torque is inputted. As a result, it is possible to reduce a contact pressure between the axial grooves 5 of the female shaft 2 and the spherical members 7 so as to improve the durability of the shaft. At the same time, when a torque load is great, it is possible to transmit the torque in a state of high rigidity.

Moreover, since the columnar members 8 are in contact with the male shaft 1 and the female shaft 2, it is possible to reduce the torsional torque toward the spherical members 7 and to suppress sideways slide of the leaf spring 9. As a result, it is possible to prevent the hysteresis from being excessively great.

As described above, according to the present embodiment, it is possible to realize a stable sliding load and, at the same time, to securely prevent backlash in the direction of rotation, thereby transmitting the torque in a state of high rigidity.

Note that the spherical member 7 is preferably a ball of rigid body. It is also preferable that the columnar member 8 of rigid body is a needle roller.

Since the columnar member (hereinafter called the needle roller) 8 receives a load thereof with a line contact, there can be obtained various advantages including that the contact pressure can be lowered, compared with the case with a ball which receives a load with a point contact. As a result, this arrangement is superior in the following points to a case in which all of the rows are in ball rolling structure.
- The attenuating performance in the sliding portion is great, compared with that in the ball rolling structure. As a result, the vibration absorbing performance is high.
- Since the needle roller is in contact with the male shaft and the female shaft at a small part, a fluctuation in sliding load can be kept low, and a vibration due to this fluctuation is not transmitted to the steering.
- If the same amount of torque is to be transmitted, the contact pressure can be kept lower in the needle roller structure. As a result, the length of the shaft in the axial direction can be reduced so that the space can be used effectively.
- If the same amount of torque is to be transmitted, the contact pressure can be kept lower in the needle roller structure. As a result, an additional process is no longer required for hardening the surfaces of the axial grooves of the female shaft by thermal treatment or the like.
- The number of the constituent parts can be reduced.
- The assembling performance can be improved.
- The assembling cost can be reduced.

As described above, the needle rollers play the essential role for torque transmission between the male shaft 1 and the female shaft 2, and are brought into sliding contact with the inner peripheral surface of the female shaft 2. This structure is superior to the conventional structure which employs spline fitting in the following respects.
- The needle rollers are manufactured in mass production, and can be manufactured at very low cost.
- The needle rollers are polished after being subjected to the thermal treatment, so that they have high surface rigidity and excellent abrasion fastness.
- Since the needle rollers have been polished, they have fine surface roughness and a low coefficient of friction in a sliding movement. As a result, the sliding load can be kept low.
- Since the length or the layout of the needle rollers can be changed in accordance with the condition of use, the needle rollers can be used in various applications without a change of the design concept.
- There is a case in which the coefficient of friction in a sliding movement is required to be further lowered, depending on the condition of use. In such a case, the sliding characteristics can be changed by performing the surface treatment of the needle rollers only. As a result, the needle rollers can be used in various applications without a change of the design concept.
- Since the needle rollers having different outer diameters by several microns can be manufactured at low cost, the gap among the male shaft, the needle rollers, and the female shaft can be minimized by selecting a diameter of the needle rollers. As a result, the rigidity of the shaft in the torsional direction can be improved easily.

Next, German Patent DE3730393C2 and the first embodiment of the present invention will be compared to each other to be examined.

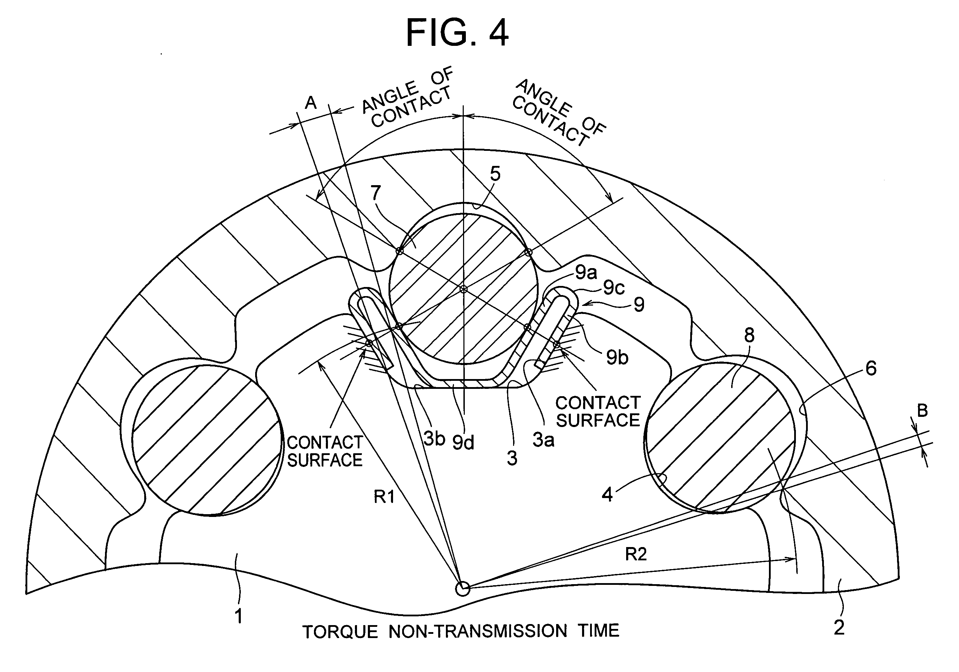

Fig. 4 is a cross sectional view of an enlarged portion of the telescopic shaft for vehicle steering according to the first embodiment of the present invention, at a non-transmission time of torque.

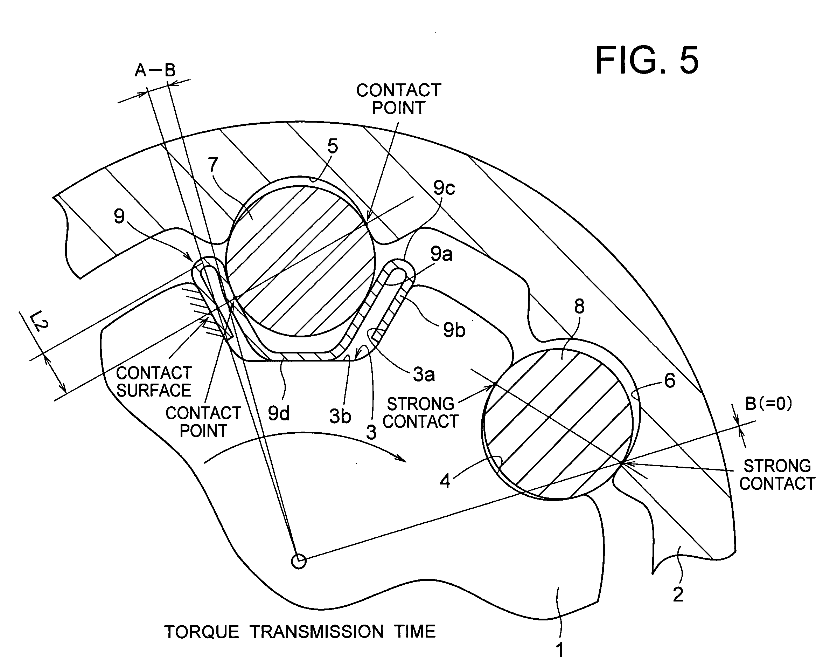

Fig. 5 is a cross sectional view of an enlarged portion of the telescopic shaft for vehicle steering according to the first embodiment of the present invention, at a transmission time of the torque.

Fig. 6 is a characteristic chart for showing the relationship between a steering angle (angle of rotation) of a steering wheel and a handle steering torque (torque of the steering wheel).

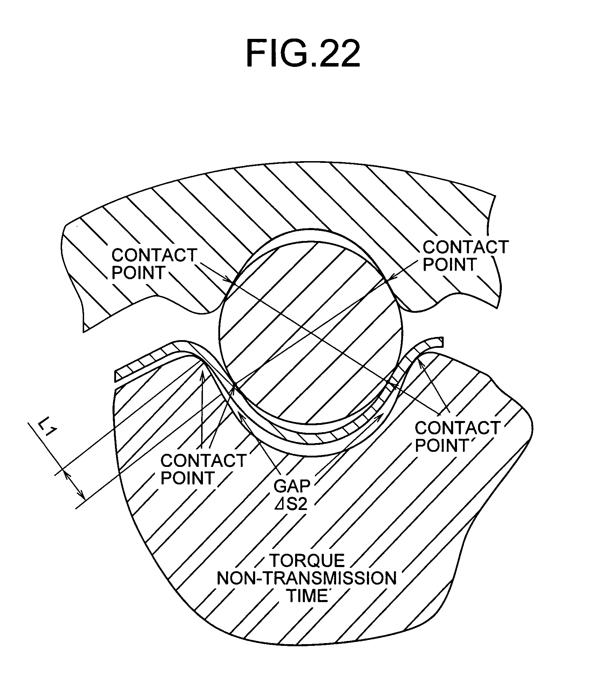

Fig. 22 is a cross sectional view of an enlarged portion of a telescopic shaft for vehicle steering according to the German patent DE No. 3730393C2, at a non-transmission time of the torque.

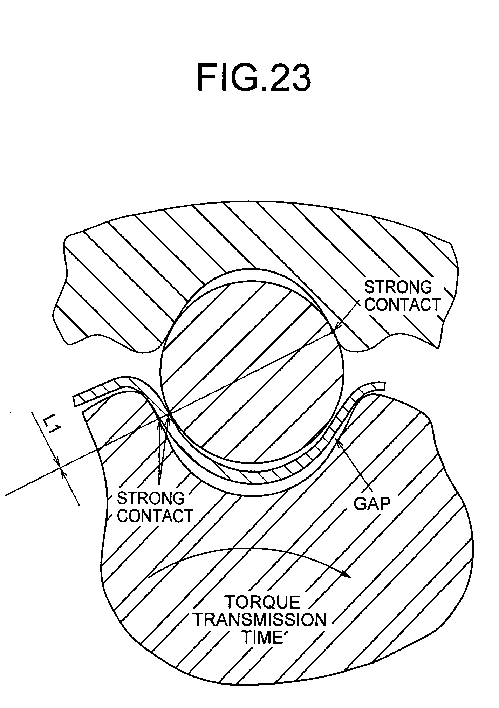

Fig. 23 is a cross sectional view of an enlarged portion of the telescopic shaft for vehicle steering according to the German patent DE No. 3730393C2, at a transmission time of the torque.

In German Patent DE No. 3730393C2 shown in Fig. 22, since preload is generated between the male shaft, ball and the female shaft at the time of torque non-transmission (including the state when the right and left torques are in balance), the leaf spring is interposed with curvature thereof and curvature of the axial groove being differed. However, in this state, an inter-contact distance (L1) between a contact point between the male shaft and the leaf spring and a contact point between the ball and the leaf spring is very small and a gap (ΔS2: flexural amount) is also small. As a result, an excessive load is generated in the contact point between the leaf spring and the ball and a great stress is generated on the leaf spring.

In German patent DE No. 3730393C2 shown in Fig. 23, when torque is loaded, the inter-contact distance (L1) is gradually decreased due to flexure of the leaf spring. The inter-contact distance L1 approximates to zero with the increase of the torque, the load applied on the contact point increases in proportion to the torque, and the stress generated in the leaf spring is further increased. Since this condition is repeatedly produced, there arises a fear that the life of the torque transmitting portion can not be kept long.

To the contrary, in the first embodiment shown in Figs. 4 and 5, the contact portion 9a on the spherical member side of the leaf spring 9 can be sufficiently flexed through the biasing portion 9c, so that a flexural amount can be sufficiently kept.

Since the columnar members 8 are provided in addition to the spherical members 7, the columnar members 8 are brought into contact with the axial grooves 4 and 6 of the male shaft 1 and the female shaft 2 before the leaf springs 9 at the time of transmission of toque, and the columnar members 8 can transmit the torque mainly. As a result, and excessive load (stress) is not applied on the spherical members 7 and the leaf springs 9.

At the time of non-transmission of toque, as shown in Fig. 4, it is arranged such that a predetermined small gap is provided between the columnar member 8 and the axial groove of the female shaft 2. When a rotatable angle of the male shaft 1 with respect to the female shaft 2 in a portion of the leaf spring 9, that is, an angle corresponding to a flexural amount of the leaf spring 9 is represented by A, and an angle of rotation in the circumferential direction of the male shaft 1 in the aforementioned gap present between the columnar member 8 and the axial groove 6 of the female shaft 2 is represented by B, the relations that (A > B) is established between the rotatable angle A and the angle of rotation B.

At the time of transmission of toque, the male shaft 1 is rotated with respect to the female shaft 2 by the angle of rotation B, so that the columnar member 8 is brought into strong contact with the axial grooves 4 and 6 of the male shaft 1 and the female shaft 2 before the leaf spring 9, and the angle of rotation B becomes zero, as shown in Fig. 5. At the same time, the leaf spring 9 is flexed and the actual angle of rotation B of the male shaft 1 with respect to the female shaft 2 in this portion becomes B so that the rotatable angle A remaining in this portion becomes (A - B). If the angle of rotation of the male shaft 1 becomes greater than that at the time of transmission of high toque, as seen from the graph of Fig. 6, the angle enters a region of high rigidity.

Consequently, it is prevented that the angle of rotation of the male shaft 1 with respect to the female shaft 2 becomes longer than B. That is, the smaller the rotatable angle of the male shaft 1 in the leaf spring 9 portion below (A - B) is, the more the male shaft rotates so that excessive flexure of the leaf spring 9 is prevented. As a result, the leaf spring is prevented from being permanently deformed.

This angle of rotation B is preferably set at 0.01° to 0.25° , partly because of the relationship with the circumferential gap present among the male shaft 1, a columnar member 8 and the female shaft 2. The columnar member 8 is required to have a gap necessary for sliding without resistance with respect to the male shaft 1 and the female shaft 2. However, when this circumferential gap is too large, a torque transmitting area defined by the male shaft 1, the leaf spring 9, the spherical member 7 and the female shaft 2 is required to be large. As a result, it is difficult to obtain satisfactory steering feeling with a touch of high rigidity.

Accordingly, after examination of various trial pieces of the telescopic shaft, the upper limit of the circumferential gap (the angle of rotation B of the female shaft 2) present among the male shaft 1, the columnar member 8 and the female shaft 2 is preferably set as 0.25° . The lower limit of the gap is set as 2 µm since only a space necessary for sliding is required, which can be preferably converted into an angle of 0.01° .

By setting this angle of rotation B, the relation between a steering angle of a steering wheel and a steering torque of the steering wheel is changed. This angle of rotation B is one-directional when rotation is given clockwise or anti-clockwise around the male shaft 1. When rotation is bidirectional, the angle becomes double in a range from 0.02° to 0.5° .

When the minimum value for the angle of rotation B is to be set, it is required to take into consideration the condition that a sliding motion between the male shaft 1, the columnar member 8 and the female 2 should be performed smoothly. Then, by providing a gap among the male shaft 1, the columnar member 8 and the female shaft 2, the problem that the sliding resistance becomes very large when the female shaft 2 is slid can be solved. The minimum required gap for sliding the female shaft 2 is determined as 2 µm. However, when there is a curve on the male shaft 1 or the female shaft 2 or a fluctuation of inner or outer diameter of either shaft in the axial direction, it is particularly required to keep the minimum gap of 2 µm in order to prevent increase in the sliding resistance.

Since the angle of rotation is changed depending on the maximum outer diameter of the male shaft 1, in the present invention, in order to make this gap to be 2 µm, the minimum value for the angle of rotation B is set as 0.01° by calculating back from an outer diameter value which is appropriate for the male shaft (steering shaft )1. In Fig. 4, the outer diameter of the male shaft 1 is set such that the torque non-transmitting state is changed to the torque transmitting state and the radius of a portion at which the columnar member 8 is brought in contact with the groove of the female shaft 2 is R2, and that the radius of a portion at which the leaf spring 9 is brought in contact with the spherical member 7 is R1 when the leaf spring 9 is flexed at the torque transmitting time, and opposed portions of the leaf spring 9 come closest to each other.

As shown in Fig. 6, a torque value at a point at which the torque is shifted into a preload rigid region by the leaf spring 9 is preferably not less than +2Nm and not more than -2Nm. A difference between a region of low rigidity and a region of high rigidity is one reason for that. It is not desirable that the driver senses backlash or noise of the steering system, or a delay of response from the vehicle for a steering operation. In case of a simple spline structure of the prior art, if there is a gap between the male spline shaft and the female spline shaft, the driver senses backlash. In order to prevent this phenomenon, it is required to remove a gap area by means of preload by the leaf spring 9. Accordingly, it is concluded after a sensory evaluation test performed by actually using vehicles that as a torque value at a point at which the preload rigid region by the leaf spring 9 shifts to a region of high rigidity, a value not less than +2Nm and not more than -2Nm is preferable.

As seen from the graph of Fig. 6, even if the male shaft 1 is rotated by the angle B in the positive direction (e.g. clockwise) or by the angle B in the negative direction (e.g. anti-clockwise), there is a possibility that the male shaft 1 can be rotated still a little further in either the positive direction or the negative direction at the time of transmission of high torque, which turns to be a region of high rigidity for steering. In this respect, the angle of rotation of the male shaft 1 in the positive or negative direction in the preload rigid region is 2B.

As described above, since the leaf spring 9 can secure a sufficient flexural amount and no excessive load (stress) is applied on the spherical member 7 and the leaf spring 9, the stress generated in the contact portion between the spherical member 7 and the leaf spring 9 at the time of torque transmission can be reduced. As a result, not great stress is generated in the leaf spring 9 portion, so that "the worn-out condition" due to permanent deformation of the leaf spring 9 can be avoided and a satisfactory preload performance can be maintained for a long term.

In Fig. 4, it is arranged such that, at the time of non-transmission of torque, small gaps are formed between the columnar member 8 and the bottom portion of the axial groove 4 of the male shaft 1 and between the columnar member 8 and the bottom portion of the axial groove 6 of the female shaft 2, but the columnar member 8 is brought into contact with the axial grooves 4 and 6 at both the end portions thereof.

In German Patent DE No. 3730393C2 shown in Figs. 22 and 23, a cross section of the axial groove of the male shaft on which the leaf spring is provided has an arch shape having a curvature, and the leaf spring is also in an arch shape having a curvature. The respective curvatures are differed to give the leaf spring a spring nature. For this reason, a contact point between the leaf spring and the male shaft is located at a corner of the male shaft, as shown in Fig. 22. As a result, as shown in Fig. 23, when torque is loaded, the whole leaf spring slides sideways so that the transmitted torque may be reduced or hysteresis may be excessively generated.

On the other hand, in the first embodiment shown in Figs. 4 and 5, the axial groove 3 of the male shaft 1 is formed of flat surfaces. The center of the axial groove 3 is consistent with the center of the male shaft 1, and the axial groove 3 has a wedge-form which is bilaterally symmetrical with respect to the center of the axial groove 3. An angle of the wedge (contact angle) is preferably 40° to 70° with respect to the center of the axial groove 3. With this arrangement, the leaf spring 9 is securely fixed to the wedge surfaces of the axial groove 3, so that the whole leaf spring 9 hardly slides sideways when the torque is loaded. As a result, it is possible to prevent deterioration of the transmitted torque and excessive generation of the hysteresis.

In German Patent DE No. 3730393C2 shown in Figs. 22 and 23, when the torque is not loaded, the contact points between the male shaft, the spherical member, the leaf spring and the female shaft are not on the same line so that, with gradual loading of the torque, the contact angle changes. As a result, there is a fear that not only the linear torsional property required for the steering shaft can not be obtained, but also an appropriate hysteresis can not be obtained.

On the other hand, in the first embodiment of the present invention shown in Figs. 4 and 5, the contact points between the male shaft 1, the spherical member 7, the leaf spring 9 and the female shaft 2 remain on the same line, irrespective of loaded state of the torque, so that the contact angle is not changed. As a result, with this arrangement, the linear torsional property required for the steering shaft can be obtained and a linear steering property with the feeling of high rigidity can be obtained.

Note that errors in manufacturing the male shaft, the female shaft and the elastic members can be absorbed upon elastic deformation of the elastic members so that a tolerance can be made greater and a low cost manufacturing can be attained.

Next, Fig. 7A, Fig. 7B and Fig. 7C are schematic views each showing a flexural state of the leaf spring which is used in each of the embodiments of the present invention.

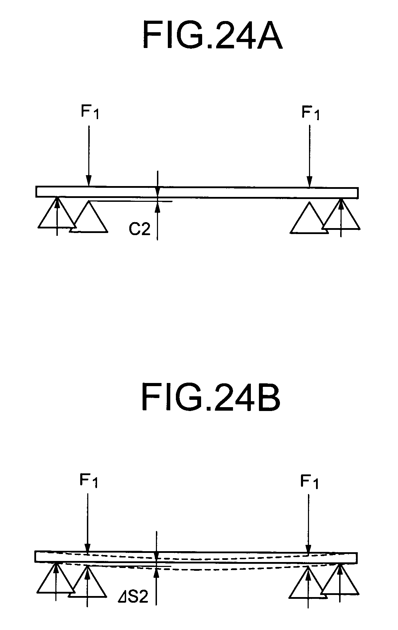

Fig. 24A and Fig. 24B are respectively schematic views each for showing a flexural state of a leaf spring used in the German patent DE No. 3730393C2.

Fig. 24 shows model examples in which the leaf spring disclosed in the German patent DE No. 3730393C2 is illustrated in a simplified manner. Fig. 24A shows a case in which an appropriate preload is expected to be applied in a state where no torque is loaded. In this case, a distance (C2) from the leaf spring to the axial groove is a stroke for allowing generation of preload as a spring. In Fig. 24B, when load (F1) is further applied at two points, the leaf spring is flexed, and is presently brought into contact with side surfaces of the axial groove. With this arrangement, it is required to receive the whole torque at points in contact with balls. As a result, a flexural amount (ΔS2) of the leaf spring can not be made great, so that it is presumably difficult for the leaf spring to have the life required as a steering shaft. In this case, C2 ≦ ΔS2.

In contrast to this, in the first embodiment of the present invention shown in Fig. 7A, the distance between the contact portion 9a on the spherical member side of the leaf spring 9 and the contact portion 9b on the groove surface side is set as (C1). When the load (F1) is applied in this state on two points (corresponding to the contact portion 9a on the spherical member side), the elastic member can be flexed sufficiently, so that a sufficient flexural amount (ΔS1) can be secured. As a result, it is possible to prevent "the worn-out condition" due to permanent deformation so as to maintain a preload performance for a long term. In this case, C1 > ΔS1.

In an embodiment of the present invention shown in Fig. 7B (a third embodiment which will be described later), the distance between the contact portion 9a on the spherical member side of the leaf spring 9 and the contact portion 9b on the groove surface side is set as (C1). When the load (F1) is applied in this state on two points (corresponding to the contact portion 9a on the spherical member side), the elastic member can be flexed sufficiently, so that a sufficient flexural amount (ΔS1) can be secured. As a result, it is possible to prevent "the worn-out state) due to permanent deformation so as to maintain a preload performance for a long term. In this case, C1 > ΔS1.

In an embodiment of the present invention shown in Fig. 7C (a fourteenth embodiment which will be described later), the distance between the contact portion 9a on the spherical member side of the leaf spring 9 and the contact portion 9b on the groove surface side is set as (C1), and the biasing portion 9c is formed of a material such as rubber or synthetic resin other than the material of these contact portions 9a and 9b. When the load (F1) is applied in this state on the two points (corresponding to the contact portion 9a on the spherical member side), the elastic member can be flexed sufficiently, so that a sufficient flexural amount (ΔS1) can be secured. As a result, it is possible to prevent "the worn-out condition" due to permanent deformation so as to maintain the preload performance for a long term. In this case, C1 > ΔS1.

As described above, it is arranged such that the whole leaf spring 9 hardly slides sideways when the torque is applied. However, the bottom portion 9d of the leaf spring 9 can shift sideways a little with respect to the bottom surface 3b of the axial groove 3.

That is, the leaf spring 9 is arranged such that the bottom portion 9d thereof is in a state of contacting with the bottom surface 3b of the axial groove 3, in the same manner as in the first embodiment, or that the distance thereof with the bottom portion 3b of the axial groove 3 is set as predetermined, in the same manner as in a second embodiment which will be described later.

Accordingly, it is possible to control the hysteresis by bringing the bottom portion 9d of the leaf spring 9 into contact with the bottom surface 3b of the axial groove 3 as the need arises, thereby obtaining a desired hysteresis. The hysteresis is required to be changed depending on a matched condition with the steering performance of each vehicle. Specifically, if the bottom portion 9d of the leaf spring 9 is set to be in a state of contacting with the bottom surface 3b of the axial groove 3, a friction is produced when the axial groove 3 and the leaf spring 9 are moved relatively to each other, so that the hysteresis can be set as comparatively large. On the other hand, if the distance between the bottom surface 3b of the axial groove 3 and the bottom portion 9d of the leaf spring 9 is set as predetermined, no friction is produced when the axial groove 3 and the leaf spring 9 are moved relatively to each other, so that the hysteresis can be set as comparatively small.

### (Second Embodiment)

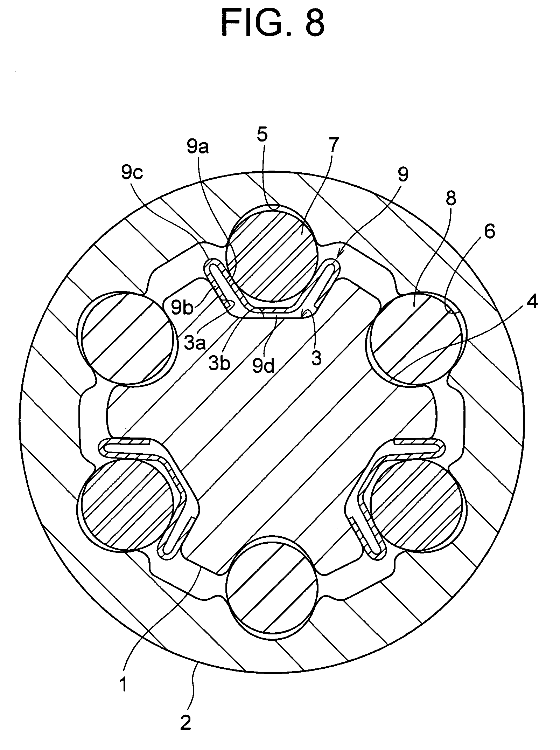

Fig. 8 is a transverse cross sectional view of a telescopic shaft for vehicle steering according to the second embodiment of the present invention (corresponding to the transverse cross sectional view, taken along the line X-X in Fig. 2A).

The second embodiment is substantially the same as the first embodiment described above, in which the bottom surface 3b of the axial groove 3 is separated from the bottom portion 9d of the leaf spring 9 by a predetermined distance.

Accordingly, in this case, as described above, the hysteresis can be controlled and no friction is caused when the axial groove 3 and the leaf spring 9 are moved relatively to each other, so that the hysteresis can be set as comparatively small.

### (Third Embodiment)

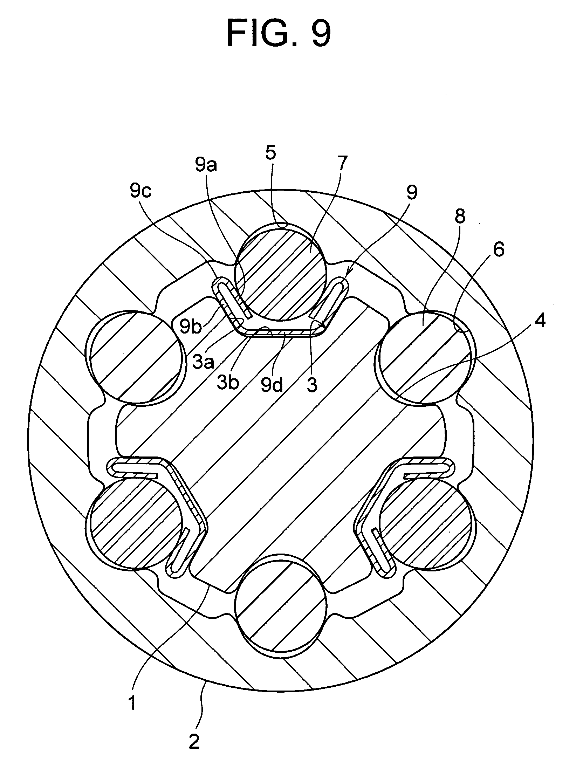

Fig. 9 is a transverse cross sectional view of a telescopic shaft for vehicle steering according to a third embodiment of the present invention (corresponding to the transverse cross sectional view, taken along the line X-X in Fig. 2A).

The third embodiment is substantially the same as the second embodiment described above, in which, in the leaf spring 9, the contact portion 9a on the spherical member side is formed at the end of the folded portion of the leaf spring 9, while the contact portion 9b is formed in a middle of the folded portion of the leaf spring 9.

Also in the same manner as in the second embodiment described above, the bottom surface 3b of the axial groove 3 is separated from the bottom portion 9d of the leaf spring 9 by a predetermined distance.

### (Fourth Embodiment)

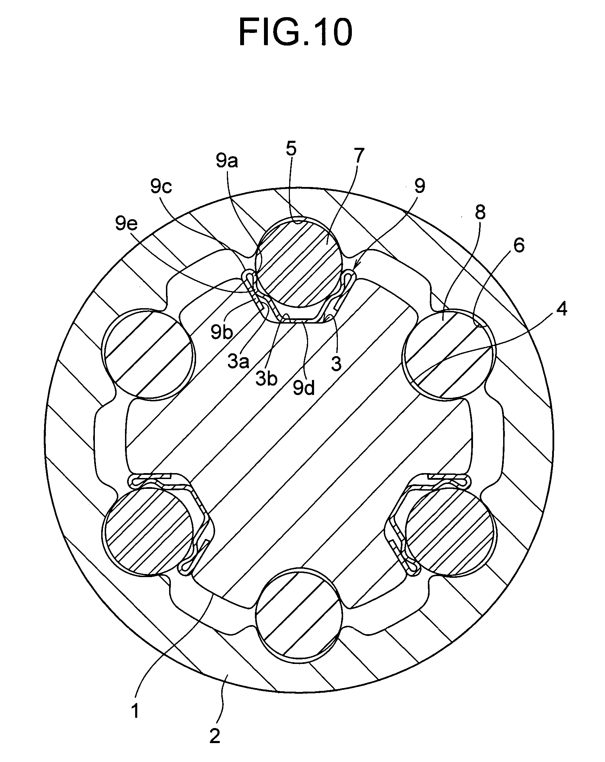

Fig. 10 is a transverse cross sectional view of a telescopic shaft for vehicle steering according to a fourth embodiment of the present invention (corresponding to the transverse cross sectional view, taken along the line X-X in Fig. 2A).

The fourth embodiment is substantially the same as the first embodiment described above, in which, in the leaf spring 9, protruding portions 9e protruded toward the contact portions 9b on the groove surface side are formed on the contact portions 9a on the spherical member side.

With this arrangement, it is possible to bring the contact portions 9a on the spherical member side into contact with the spherical member 7 at four points, to reduce a load at the contact points between the leaf spring 9 and the spherical member 7, and to mitigate the stress.

The bottom portion 9d of the leaf spring 9 is provided in a state of contacting with the bottom surface 3b of the axial groove 3. In this case, as described above, the hysteresis can be controlled and friction is caused when the axial groove 3 and the leaf spring 9 are moved relatively to each other, so that the hysteresis can be set as comparatively great.

### (Fifth Embodiment)

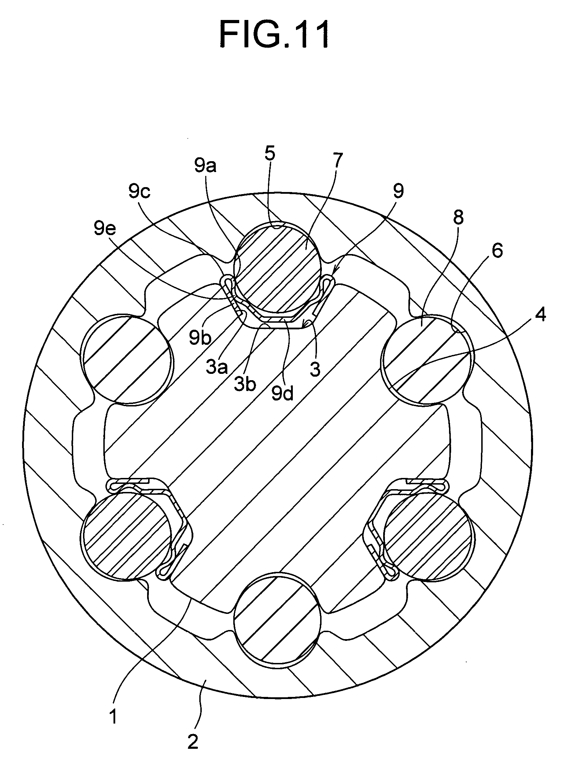

Fig. 11 is a transverse cross sectional view of a telescopic shaft for vehicle steering according to a fifth embodiment of the present invention (corresponding to the transverse cross sectional view, taken along the line X-X in Fig. 2A).

The fifth embodiment is substantially the same as the fourth embodiment described above, in which the bottom surface 3b of the axial groove 3 is separated from the bottom portion 9d of the leaf spring 9 by a predetermined distance.

Accordingly, in this case, as described above, the hysteresis can be controlled and no friction is caused when the axial groove 3 and the leaf spring 9 are moved relatively to each other, so that the hysteresis can be set as comparatively small.

### (Sixth Embodiment)

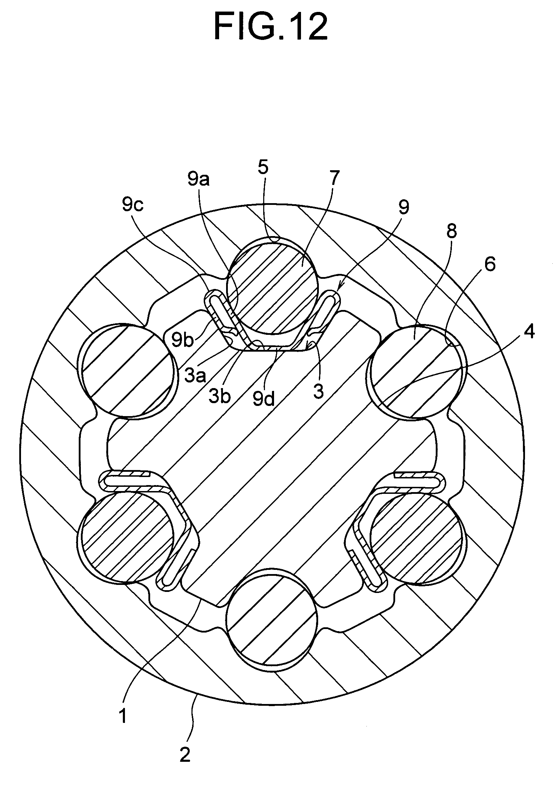

Fig. 12 is a transverse cross sectional view of a telescopic shaft for vehicle steering according to a sixth embodiment of the present invention (corresponding to the transverse cross sectional view, taken along the line X-X in Fig. 2A).

The sixth embodiment is substantially the same as the first embodiment described above, in which, in the leaf spring 9, the tip end of each contact portion 9b on the axial groove side is folded back inward so as to be contacted with the contact portion 9a on the spherical member side.

With this arrangement, the rigidity of the leaf spring 9 can be enhanced, and the torsional rigidity can also be enhanced.

### (Seventh Embodiment)

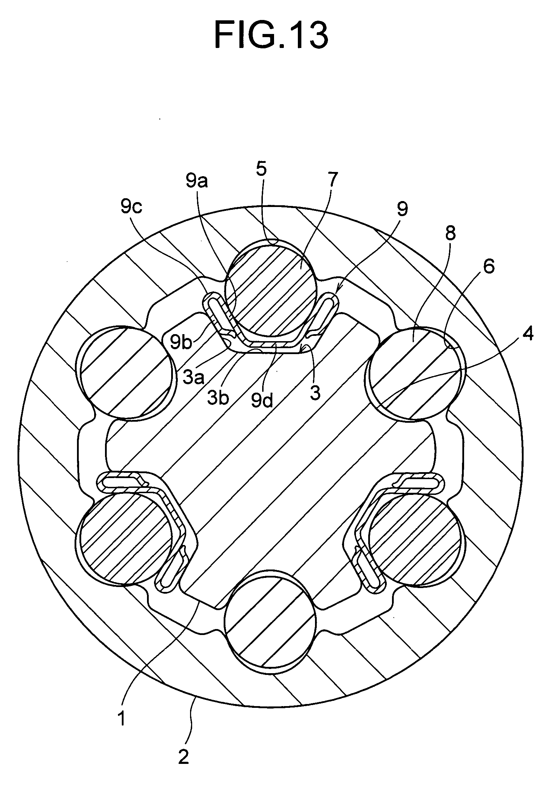

Fig. 13 is a transverse cross sectional view of a telescopic shaft for vehicle steering according to a seventh embodiment of the present invention (corresponding to the transverse cross sectional view, taken along the line X-X in Fig. 2A).

The seventh embodiment is substantially the same as the sixth embodiment described above, in which the bottom surface 3b of the axial groove 3 is separated from the bottom portion 9d of the leaf spring 9 by a predetermined distance.

Accordingly, in this case, as described above, the hysteresis can be controlled and no friction is caused when the axial groove 3 and the leaf spring 9 are moved relatively to each other, so that the hysteresis can be set as comparatively small.

### (Eighth Embodiment)

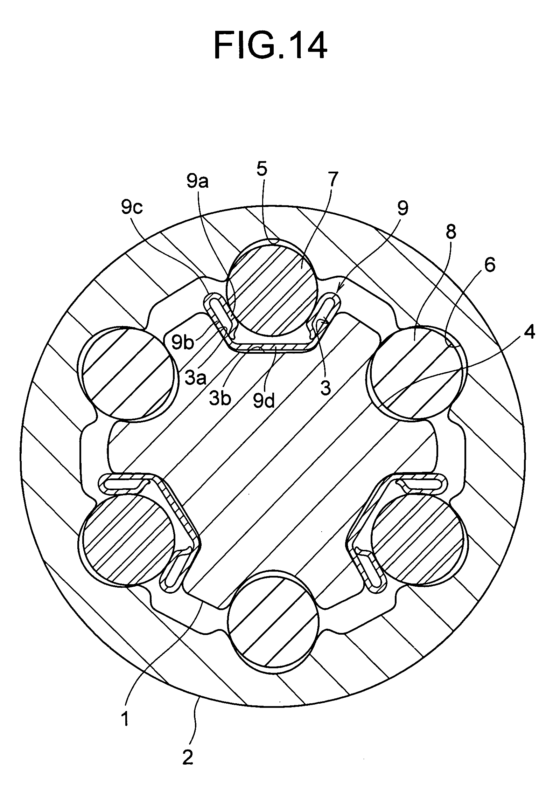

Fig. 14 is a transverse cross sectional view of a telescopic shaft for vehicle steering according to an eighth embodiment of the present invention (corresponding to the transverse cross sectional view, taken along the line X-X in Fig. 2A).

The eighth embodiment is substantially the same as the third embodiment described above, in which, in the leaf spring 9, the contact portion 9a on the spherical member side is formed on the end side of each folded portion of the leaf spring 9, while the contact portion 9b on the groove surface is formed in a middle of each folded portion of the leaf spring 9. Also in this case, the same function and effect as those in the third embodiment described above can be obtained.

In the leaf spring 9, the tip end of each contact portion 9a on the spherical member side is folded back outward so as to be in contact with the contact portion 9a on the spherical member side. With this arrangement, the rigidity of the leaf spring 9 can be enhanced, and the torsional rigidity can also be enhanced.

### (Ninth Embodiment)

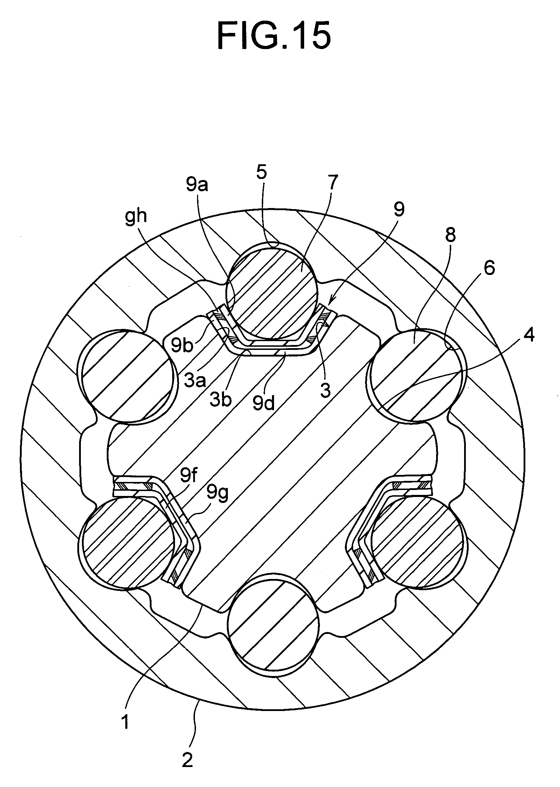

Fig. 15 is a transverse cross sectional view of a telescopic shaft for vehicle steering according to a ninth embodiment of the present invention (corresponding to the transverse cross sectional view, taken along the line X-X in Fig. 2A).

The ninth embodiment is substantially the same as the first embodiment described above, in which, in the leaf spring 9, the biasing portion 9c in the folded-back form is abolished, and a pair of contact portions 9a on the spherical member side are formed by an inner side plate 9f folded back substantially in a U shape. A pair of contact portions 9b on the groove surface sides are formed by an outer side plate 9g folded back substantially in a U shape. A biasing portion 9h which is formed of a different elastic material such as rubber or synthetic resin is interposed between a flat surface portion of the inner side plate 9f and a flat surface portion of the outer side plate 9g.

There is no space present between the bottom flat surface of the inner side plate 9f and the bottom flat surface of the outer side plate 9g, and the both side plates are set in a contact state. In this case, the hysteresis can be controlled and friction is caused when the inner side plate 9f and the outer side plate 9g are moved relatively to each other, so that the hysteresis can be set as comparatively great.

### (Tenth Embodiment)

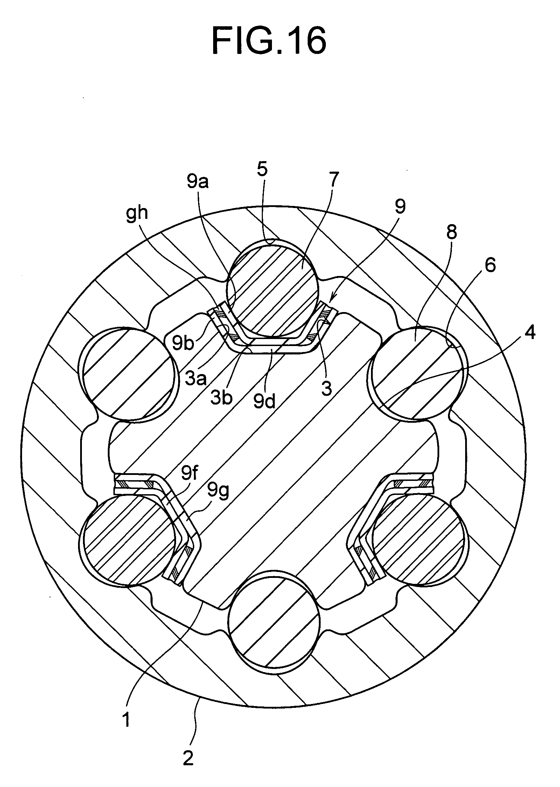

Fig. 16 is a transverse cross sectional view of a telescopic shaft for vehicle steering according to a tenth embodiment of the present invention (corresponding to the transverse cross sectional view, taken along the line X-X in Fig. 2A).

The tenth embodiment is substantially the same as the ninth embodiment described above, in which a slight space is present between the bottom flat surface of the inner side plate 9f and the bottom flat surface of the outer side plate 9g, and the both side plates are set in a non-contact state. In this case, the hysteresis can be controlled and no friction is caused when the inner side plate 9f and the outer side plate 9g are moved relatively to each other, so that the hysteresis can be set as comparatively small.

### (Eleventh Embodiment)

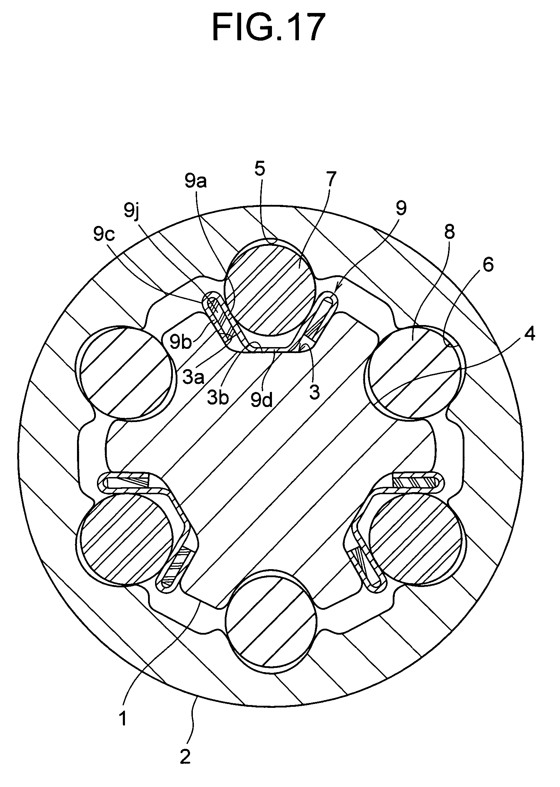

Fig. 17 is a transverse cross sectional view of a telescopic shaft for vehicle steering according to an eleventh embodiment of the present invention (corresponding to the transverse cross sectional view, taken along the line X-X in Fig. 2A).

The eleventh embodiment is substantially the same as the first embodiment described above, except that in the leaf spring 9, a second biasing portion 9j which is formed of a different material such as rubber or synthetic resin is interposed between the contact portion 9a on the spherical member side and the contact portion 9b on the groove surface side.

With this arrangement, an elasticity of the different elastic member is added to the elasticity of the leaf spring 9 itself, whereby a higher torsional rigidity can be obtained.

### (Twelfth Embodiment)

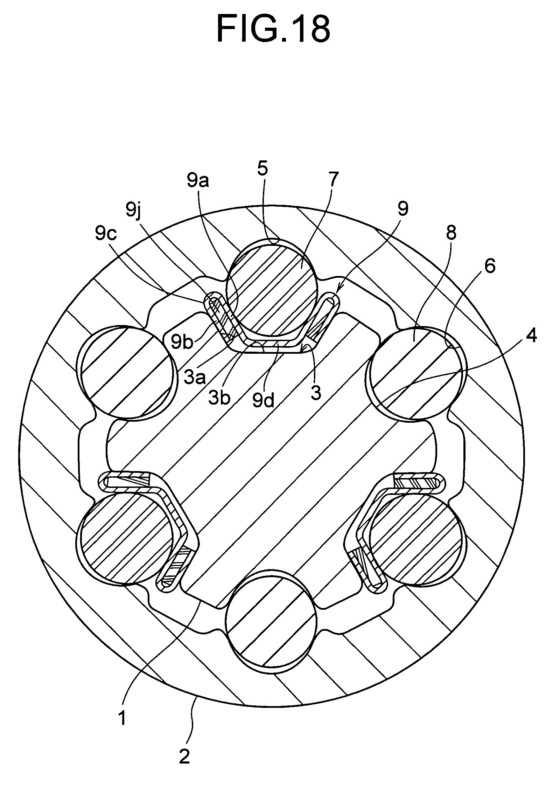

Fig. 18 is a transverse cross sectional view of a telescopic shaft for vehicle steering according to a twelfth embodiment of the present invention (corresponding to the transverse cross sectional view, taken along the line X-X in Fig. 2A).

The twelfth embodiment is substantially the same as the second embodiment described above, in which, in the leaf spring 9, the second biasing portion 9j which is formed of a different material such as rubber or synthetic resin is interposed between the contact portion 9a on the spherical member side and the contact portion 9b on the groove surface side.

With this arrangement, an elasticity of the different elastic member is added to the elasticity of the leaf spring 9 itself, whereby a higher torsional rigidity can be obtained.

### (Thirteenth Embodiment)

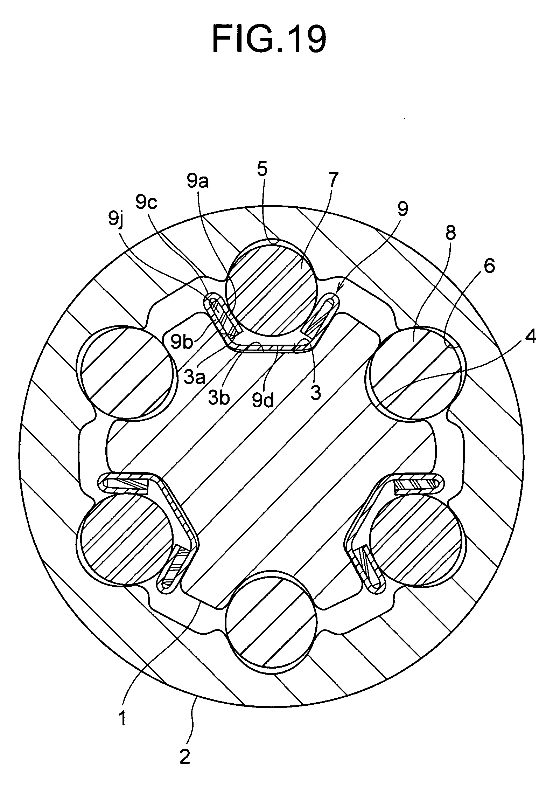

Fig. 19 is a transverse cross sectional view of a telescopic shaft for vehicle steering according to a thirteenth embodiment of the present invention (corresponding to the transverse cross sectional view, taken along the line X-X in Fig. 2A).

The thirteenth embodiment is substantially the same as the third embodiment described above, except that in the leaf spring 9, the second biasing portion 9j which is formed of a different material such as rubber or synthetic resin is interposed between the contact portion 9a on the spherical member side and the contact portion 9b on the groove surface side.

With this arrangement, an elasticity of a different elastic member is added to the elasticity intrinsic to the leaf spring 9 itself, whereby a higher torsional rigidity can be obtained.

### (Fourteenth Embodiment)

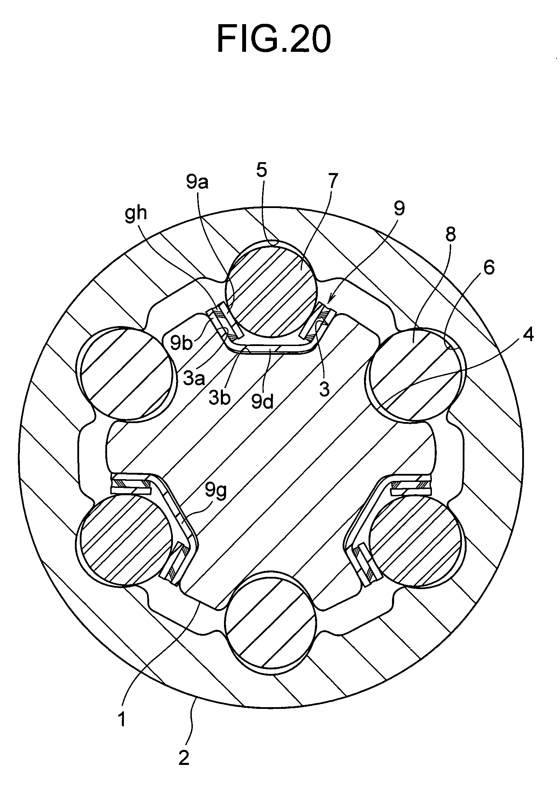

Fig. 20 is a transverse cross sectional view of a telescopic shaft for vehicle steering according to a fourteenth embodiment of the present invention (corresponding to the transverse cross sectional view, taken along the line X-X in Fig. 2A).

The fourteenth embodiment is substantially the same as the ninth or tenth embodiment described above, in which, in the leaf spring 9, a pair of contact portions 9a on the spherical member side are composed of inner side plates constituted by two plates, while a pair of contact portions 9b on the groove surface sides are composed of an outer side plate 9g folded substantially in a U shape. The biasing portion 9h formed of a different elastic material such as rubber or synthetic resin is interposed between these side plates.

With this arrangement, it is possible to make the best use of the elasticity intrinsic to the material. Specially when a low torsional rigidity is to be desired, this property can be satisfactorily exhibited.

### (Fifteenth Embodiment)

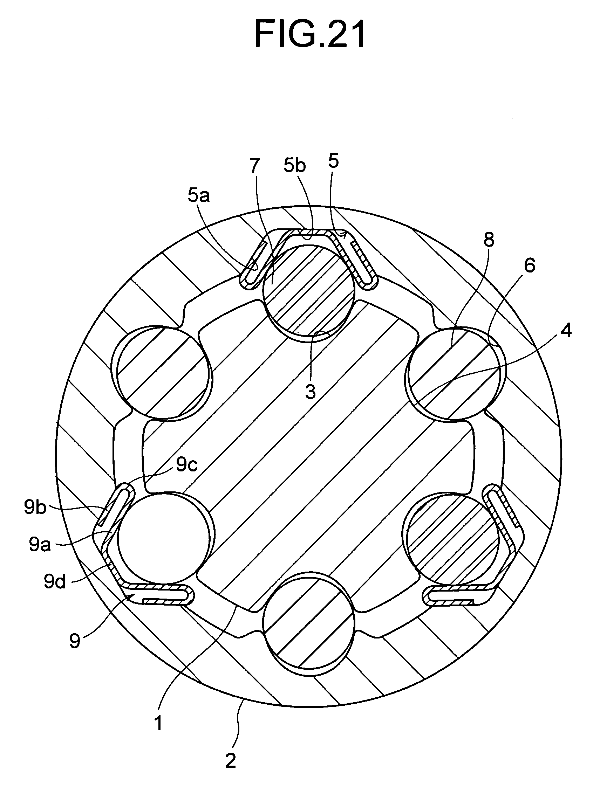

Fig. 21 is a transverse cross sectional view of a telescopic shaft for vehicle steering according to a fifteenth embodiment of the present invention (corresponding to the transverse cross sectional view, taken along the line X-X in Fig. 2A).

The fifteenth embodiment is substantially the same as the first embodiment described above except that the leaf spring 9 is provided on the female shaft 2 side.

The axial groove 5 of the female shaft 2 is comprised of a pair of slanting flat-shaped side surfaces 5a and a bottom surface 5b formed to be flat between these paired flat-shaped side surfaces 5a.

A leaf spring 9 which is brought into contact with the spherical member 7 for preload is interposed between the axial groove 5 of the female shaft 2 and the spherical member 7.

This leaf spring 9 comprises contact portions 9a on the spherical member side which are in contact with the spherical member 7 at two points, contact portions 9b on the groove surface sides each is separated from the contact portion 9a on the spherical member side by a predetermined distance in the substantially circumferential direction and is in contact with the flat-shaped side surface 5a of the axial groove 5 of the female shaft 2, a biasing portion 9c for elastically biasing the contact portion 9a on the spherical member side and the contact portion 9b on the groove surface side in a direction in which they are separated from each other, and a bottom portion 9d which is opposed to the bottom surface 5b of the axial groove 5.

This biasing portion 9c is folded back to be substantially U-shaped and in substantially arch-shaped. The contact portion 9a on the spherical member side and the contact portion 9b on the groove surface side can be elastically biased by this folded-back biasing portion 9c in a direction in which both the contact portions are separated from each other.

As described above, even when the leaf spring 9 is provided in a reverse manner to that in the first embodiment, the same function and the effect can be obtained.

Note that the present invention is not limited to these embodiments described above, but can be altered in various manners.

## Claims

1. A telescopic shaft for vehicle steering which is installed in a steering shaft of a vehicle and in which a male shaft and a female shaft are fitted to each other to be unrotatable and freely slidable, **characterized in that**:
a first torque transmitting member is interposed between at least one of axial grooves which are respectively formed on the outer peripheral surface of said male shaft and on the inner peripheral surface of said female shaft through an elastic member;
a second torque transmitting member is interposed between at least another of axial grooves which are respectively formed on the outer peripheral surface of said male shaft and on the inner peripheral surface of said female shaft; and
said elastic member comprises:
a contact portion on the transmitting member side which is in contact with said first torque transmitting member;
a contact portion on the groove surface side which is separated from said contact portion on the transmitting member side by a predetermine distance in a substantially circumferential direction and, at the same time, in contact with the groove surface of the axial groove of said male shaft or said female shaft; and
a biasing portion for elastically biasing said contact portion on the transmitting member side and said contact portion on the groove surface side in a direction in which both the contact portions are separated from each other.

2. A telescopic shaft for vehicle steering according to claim 1, wherein:
said first torque transmitting member comprises a rolling member which is rotated when both the shafts are moved relatively to each other in the axial direction; and
said second torque transmitting member comprises a sliding member which slides in a slip manner when both the shafts are moved relatively to each other in the axial direction.

3. A telescopic shaft for vehicle steering according to claim 1 or 2, wherein the biasing portion of said elastic member is in a folded-back form which is folded back between the contact portion on the transmitting member side and the contact portion on the groove surface side.

4. A telescopic shaft for vehicle steering according to any one of claims 1 to 3, wherein:
the axial groove of said male shaft or said female shaft comprises a flat-shaped side surface which is in contact with the contact portion on the groove surface and a bottom surface which is connected to said flat-shaped side surface;
said elastic member has a bottom portion opposed to said bottom surface of said axial groove; and
the bottom portion of said elastic member is arranged to be in a state of contacting with said bottom surface of said axial groove, or the bottom surface of said axial groove is set to be separated from the bottom portion of said elastic portion by a predetermined distance.

5. A telescopic shaft for vehicle steering according to any one of claims 1 to 4, wherein the biasing portion of said elastic member is separately provided from the contact portion on said transmitting member side and the contact portion on the groove surface side, and is formed of a material different therefrom.

6. A telescopic shaft for vehicle steering according to any one of claims 1 to 4, wherein said elastic member has, in addition to said contact portion on the transmitting member side, said contact portion on the groove surface side and said biasing portion, a second biasing portion which is separately formed of a material different therefrom.

7. A telescopic shaft for vehicle steering according to any one of claims 1 to 6, wherein said elastic member comprises a leaf spring.

8. A telescopic shaft for vehicle steering according to claim 6 or 7, wherein said biasing member separately formed of a different material and said second biasing member also separately formed of a different material are formed of rubber or synthetic resin.

9. A telescopic shaft for vehicle steering according to any one of claims 1 to 8, wherein a lubricating agent is applied between said axial groove of the male shaft, said axial groove of the female shaft, said elastic member and said first torque transmitting member.

10. A telescopic shaft for vehicle steering according to any one of claims 1 to 8, wherein a predetermined gap is provided among said male shaft, said second torque transmitting member and said female shaft and the relation of A > B is satisfied when a rotatable angle among said male shaft, said elastic member, said first torque transmitting member and said female shaft in the circumferential direction of the male shaft is A, and an angle of rotation of said gap among said male shaft, said second torque transmitting member and said female shaft in the circumferential direction of the male shaft is B.

11. A telescopic shaft for vehicle steering according to claim 10, wherein said angle of rotation B of the male shaft for said predetermined gap is set within a range from 0.01° to 0.25° .
